# EUROPÄISCHE PATENTSCHRIFT

(11) **EP 3 892 955 B1**
(45) Veröffentlichungstag und Bekanntmachung des Hinweises auf die Patenterteilung: **30.03.2022**
(21) Anmeldenummer: 21160597.7
(22) Anmeldetag: 04.03.2021
(51) Int. Cl.: G01B 11/02, G03B 3/10, G01S 7/497, G01S 17/10, G01S 17/88, G02B 7/08, G02B 7/40, G03B 13/20, G03B 13/36

(54) **KAMERA UND VERFAHREN ZUR ERFASSUNG VON BILDDATEN**
CAMERA AND METHOD FOR DETECTING IMAGE DATA
CAMÉRA ET PROCÉDÉ DE DÉTECTION DES DONNÉES D'IMAGE

(30) Priorität: 09.04.2020 DE 102020109928
(43) Veröffentlichungstag der Anmeldung: 13.10.2021
(73) Patentinhaber: SICK AG, 79183 Waldkirch (DE)
(72) Erfinder: Müller, Romain, 79252 Stegen (DE); Pontiggia, Tobias, 79215 Elzach (DE)

(56) Entgegenhaltungen:
- EP-A1- 2 051 120
- WO-A1-2012/014521
- DE-B4- 10 213 861
- US-A- 5 436 656

## Beschreibung

Die Erfindung betrifft eine Kamera und ein Verfahren zur Erfassung von Bilddaten eines Objekts in einem Erfassungsbereich nach dem Oberbegriff von Anspruch 1 beziehungsweise 15.

In industriellen Anwendungen werden Kameras in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine weitere Anwendung von Kameras ist das Lesen von Codes. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. Auch die automatische Texterfassung von gedruckten Adressen (OCR, Optical Character Recognition) oder Handschriften ist im Prinzip ein Lesen von Codes. Typische Anwendungsgebiete von Codelesern sind Supermarktkassen, die automatische Paketidentifikation, Sortierung von Postsendungen, die Gepäckabfertigung in Flughäfen und andere Logistikanwendungen.

Eine häufige Erfassungssituation ist die Montage der Kamera über einem Förderband. Die Kamera nimmt während der Relativbewegung des Objektstroms auf dem Förderband Bilder auf und leitet in Abhängigkeit der gewonnenen Objekteigenschaften weitere Bearbeitungsschritte ein. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird. Wenn die Kamera ein kamerabasierter Codeleser ist, werden die Objekte für eine korrekte Sortierung oder ähnliche Bearbeitungsschritte anhand der angebrachten Codes identifiziert.

Die Kamera ist vielfach Teil eines komplexen Sensorsystems. Beispielsweise ist es bei Lesetunneln an Förderbändern üblich, eine Vielzahl von kamerabasierten Codelesern einerseits nebeneinander zur Abdeckung einer größeren Förderbandbreite und andererseits aus unterschiedlichen Perspektiven zu montieren, um Objekte von mehreren Seiten aufzunehmen. Weiterhin wird oftmals die Geometrie der geförderten Objekte vorab mit einem gesonderten Laserscanner vermessen, um daraus Fokusinformationen, Auslösezeitpunkte, Bildbereiche mit Objekten und dergleichen zu bestimmen.

Ohne Vorabinformation eines Laserscanners über die Objektabstände lässt sich anhand des Kontrasts feststellen, ob ein Bild in einer scharf eingestellten Fokuslage aufgenommen ist. Um auf diese Weise den Fokus einzustellen, müssen viele Bilder aufgenommen werden, und anfangs ist kein guter Startpunkt bekannt. Das ist insbesondere bei einem sehr kleinen Tiefenschärfenbereich problematisch, weil die Kontraste außerhalb des Tiefenschärfenbereichs recht verschmiert sind und es somit schwierig ist anzugeben, in welche Richtung die Fokusverstellung sich bewegen soll.

Eine andere Möglichkeit ist, den Abstand zu dem Objekt mit der Kamera selbst zu messen. Dabei kann jedoch ein Fehler der Abstandsmessung größer werden als der Tiefenschärfenbereich, mit dem Ergebnis, dass die anhand der Abstandsmessung eingestellte Fokuslage immer noch nicht zur Aufnahme scharfer Bilder führt.

In der DE 10 2018 105 301 A1 wird ein Abstandssensor in eine Kamera integriert, der auf einem Lichtlaufzeitverfahren basiert (TOF, Time of Flight). Damit wird ein Höhenprofil gemessen, und anhand dessen werden verschiedene Funktionen umgesetzt. Eine dieser Funktionen ist die Einstellung der Fokuslage einer Empfangsoptik. Die Genauigkeit der Abstandsmessung und der Einstellung der Fokuslage wird dabei nicht diskutiert.

Die DE 102 13 861 B3 befasst sich mit einem optischen Reflexionssensor mit einem Signalprozessor, der Genauigkeitsberechnungsmittel zur Berechnung der Wiederholbarkeit von Messwerten, die durch eine Anzahl der Messungen gewonnen wurden, sowie Einstellungsmittel zur Einstellung einer Schwellenbreite auf Grundlage der berechneten Wiederholbarkeit aufweist.

Die WO 2012/014521 A1 offenbart einen Abstandssensor, der die Anzahl der in einen gleitenden Mittelwert einfließenden Messungen anhand eines Werkstückmodells einlernt.

Aus der EP 2 051 120 A1 ist eine Linsenvorrichtung mit einer Fokuslagenerkennung bekannt, die einen Bereich variieren kann, mit dessen Hilfe die Fokuslage bestimmt wird.

Es ist daher Aufgabe der Erfindung, eine verbesserte Aufnahme von Bildern in scharf eingestellter Fokuslage zu erreichen.

Diese Aufgabe wird durch eine Kamera und ein Verfahren zur Erfassung von Bilddaten eines Objekts in einem Erfassungsbereich nach Anspruch 1 beziehungsweise 15 gelöst. Ein Bildsensor nimmt Bilder beziehungsweise Bilddaten des Erfassungsbereichs und somit eines dort befindlichen Objekts auf. Um scharfe Bilder zu erzeugen, ist eine fokusverstellbare Empfangsoptik vorgesehen, also ein Empfangsobjektiv, das je nach Qualitätsanforderungen eine oder mehrere Linsen und sonstige optische Elemente aufweist. Ein Abstandssensor misst einen Abstandswert für den Abstand zwischen der Kamera und dem aufzunehmenden Objekt. Eine Steuer- und Auswertungseinheit fungiert als Fokusverstelleinheit. Sie erhält dafür den Abstandswert von dem Abstandssensor und stellt die Fokuslage der Empfangsoptik auf diesen Abstandswert ein. Die Steuer- und Auswertungseinheit ist vorzugsweise zusätzlich mit dem Bildsensor verbunden, um Bilddaten auszulesen, vorzuverarbeiten, auszuwerten und dergleichen. Alternativ gibt es jeweils eigene Bausteine, die sich um die Fokussierung einerseits und die sonstigen Aufgaben in der Kamera wie Verarbeitung der Bilddaten kümmern.

Die Erfindung geht von dem Grundgedanken aus, den Abstandswert mit einer variablen Messdauer zu messen. Denn der Abstandssensor misst den Abstandswert umso genauer, je mehr Messdauer für die Abstandsmessung zur Verfügung steht. Andererseits ist die Anforderung an die Genauigkeit der Abstandsmessung davon abhängig, in welchem Abstand sich das Objekt befindet, da der Tiefenschärfenbereich und somit das Abstandsintervall, in dem eine Fokusabweichung zwischen eingestellter und idealer Fokuslage geduldet werden kann, eine Abstandsabhängigkeit aufweist. Um das beides zu berücksichtigen, wird anhand eines vorläufigen Abstandswerts, insbesondere einer vorläufigen Messung des Abstandssensors mit noch kurzer Messdauer, eine tolerierbare Fokusabweichung oder notwendige Präzision der Einstellung der Fokuslage für eine geforderte Bildschärfe bestimmt. Dann wird der Abstand über eine Messdauer gemessen, mit der der Abstandswert mindestens so genau wird, dass der verbleibende Messfehler höchstens so groß ist wie diese noch hinnehmbare Fokusabweichung. Nochmals anders ausgedrückt misst der Abstandssensor über eine Messdauer, die sicherstellt, dass der Messfehler klein genug ist, damit die daraufhin eingestellte Fokuslage innerhalb des Tiefenschärfenbereichs liegt. Dabei darf der Begriff Tiefenschärfenbereich nicht zu eng ausgelegt werden, wie unten noch erläutert.

Die Erfindung hat den Vorteil, dass eine präzise Fokussierung möglich ist. Durch die dynamische Anpassung der Messdauer an die tatsächlich für das konkret aufzunehmende Objekt geforderte Genauigkeit wird zugleich jede unnötige Trägheit der Fokusverstellung vermieden, anders als wenn beispielsweise von vorneherein und abstandsunabhängig eine konstante lange Messdauer für den Abstandssensor gewählt würde. Der Abstandssensor kann selbst einen guten Startwert schon nach kurzer Messdauer liefern. In gewissen Abstandsbereichen, insbesondere bei großem Tiefenschärfenbereich im Fernbereich, genügt schon dieser Startwert, weil die Messfehler klein genug sind. Sobald erforderlich, und nur dann, wird eine längere Messdauer verwendet, um eine Fokuslage auch bei wenig Spielraum für eine Fokusabweichung, insbesondere bei kleinem Tiefenschärfenbereich im Nahbereich, noch entsprechend den Anforderungen genau einzustellen.

Der Abstandssensor ist bevorzugt in die Kamera integriert. Dadurch bleibt das System kompakt und gekapselt. Die Steuer- und Auswertungseinheit hat einen einfachen internen Zugriff auf den Abstandssensor.

Der Abstandssensor ist bevorzugt als optoelektronischer Abstandssensor insbesondere nach dem Prinzip des Lichtlaufzeitverfahrens ausgebildet. Derartige Abstandssensoren sind als fertige Chips beziehungsweise Module erhältlich. Besonders bevorzugt weist der Abstandssensor eine Vielzahl von SPADs auf (Single-Photon Avalanche Photodiode), die jeweils über TDCs (Time-to-Digital Converter) eine Einzellichtlaufzeit messen. Dann lässt sich über die Anzahl der Einzellichtlaufzeiten, die mittels einer statistischen Auswertung in einen Abstandswert eingehen, der Messfehler reduzieren. Eine längere Messdauer erlaubt mehrfaches Aussenden und Empfangen von Lichtpulsen und damit die Erfassung genauerer Abstandswerte.

Die Steuer- und Auswertungseinheit ist bevorzugt dafür ausgebildet, mit Hilfe der Bilddaten einen Codeinhalt eines Codes auf dem Objekt zu lesen. Die Kamera wird so zu einem kamerabasierten Codeleser für Barcodes und/oder 2D-Codes nach diversen Standards, gegebenenfalls auch für eine Texterkennung (OCR, Optical Character Reading). Bevor ein Code gelesen wird, erfolgt noch bevorzugter eine Segmentierung, mit der interessierende Bereiche (ROI, Region of Interest) als Codekandidaten identifiziert werden.

Die Steuer- und Auswertungseinheit ist bevorzugt dafür ausgebildet, den Abstandssensor jeweils für eine Abstandsmessung mit einer erforderlichen Messdauer umzuparametrieren. Der Abstandssensor wird somit für die jeweilige Messung umkonfiguriert und liefert anschließend mit der jetzt passend gewählten Messdauer einen Abstandswert, für den gewährleistet ist, dass die Messfehler klein genug sind.

Der Abstandssensor ist bevorzugt dafür ausgebildet, einzelne Abstandsmesswerte nach einer festen Einzelmessdauer zu erzeugen, wobei die Steuer- und Auswertungseinheit dafür ausgebildet ist, eine erforderliche Messdauer als Vielfaches der Einzelmessdauer durch eine Vielzahl von Einzelmessungen einzustellen. In dieser Ausführungsform liefert der Abstandssensor schon nach einer vorzugsweise kurzen Einzelmessdauer einen Messwert. Dessen Präzision reicht aber allenfalls für einen Teil des abzudeckenden Abstandsbereichs aus. Ansonsten wird die Messdauer durch Messwiederholungen verlängert, so dass dann ein genauerer Abstandsmesswert aus k einzelnen Abstandsmesswerten berechnet werden kann.

Die Steuer- und Auswertungseinheit ist bevorzugt dafür ausgebildet, den Abstandswert als gleitendes Mittel über eine Vielzahl von Einzelmessungen zu bestimmen. Ein gleitendes Mittel hat den Vorteil, dass nach einer kurzen Einschwingphase über die jeweilige Historie bei Bedarf jeweils schon nach einer einzigen weiteren Einzelmessung ein Abstandmesswert mit entsprechender Statistik zur Verfügung steht.

Die Steuer- und Auswertungseinheit ist bevorzugt dafür ausgebildet, den gleitenden Mittelwert zurückzusetzen, wenn sich ein einzelner Abstandsmesswert um mindestens einen Schwellenwert vom bisherigen gleitenden Mittelwert unterscheidet. Ein gleitender Mittelwert bleibt gültig, solange im Erfassungsbereich noch derselbe Abstand gemessen wird. Bewegt sich das Objekt, so dass nun der Abstand zu einer anderen Objektstruktur gemessen wird, oder tritt gar ein anderes Objekt in den Erfassungsbereich, so würde der gleitende Mittelwert noch durch den vorigen Abstand verfälscht, und dann ist es besser, die Mittelung neu zu beginnen und die Historie zu vergessen. Beurteilt wird dies durch Vergleich des Ergebnisses einer aktuellen Einzelmessung mit dem bisherigen gleitenden Mittelwert, denn die aktuelle Einzelmessung sollte in der erwartbaren Streuung liegen. Wird bei diesem Vergleich ein Schwellenwert überschritten, so wird der gleitende Mittelwert zurückgesetzt, d.h. ein neuer gleitender Mittelwert beginnend mit der aktuellen Einzelmessung bestimmt. Der Schwellenwert kann vom aktuellen Abstandswert abhängig gemacht werden, sei es die aktuelle Einzelmessung oder der bisherige gleitende Mittelwert, weil bei einem größeren Abstand auch größere Messfehler zu erwarten sind und daher auch größere Schwankungen zulässig sind.

Der vorläufige Abstandswert ist bevorzugt ein einzelner Abstandsmesswert oder ein bisheriges gleitendes Mittel über einige Einzelmessungen. Die erforderliche Messdauer, um einen Abstand mit ausreichend kleinen Messfehlern zu bestimmen, hängt vom Objektabstand ab, wie sogleich ab dem nächsten Absatz noch näher ausgeführt. Dieser Objektabstand ist jedoch anfangs unbekannt, so dass sich scheinbar ein Henne-Ei-Problem ergibt. Tatsächlich lässt sich das aber auflösen, indem die Messdauer entsprechend dem vorläufigen Abstandswert bestimmt wird. Der vorläufige Abstandswert ist zwar noch mit zu großem Messfehler behaftet, ist jedoch genau genug, um die Messdauer festzulegen, wobei gegebenenfalls sicherheitshalber eine leichte Überschätzung eingeplant sein kann. Dem vorläufigen Abstandswert kann eine Einzelmessung oder ein gleitendes Mittel über nur einige Einzelmessungen zugrunde gelegt werden. Prinzipiell könnte die Messdauer mit zunehmender Genauigkeit des gleitenden Mittels nach weiteren Messwiederholungen nachgeführt werden, wenn sich herausstellt, dass der ursprünglich verwendete vorläufige Abstandswert zu weit abwich, und beispielsweise noch mindestens eine weitere Messwiederholung angehängt werden.

Die Steuer- und Auswertungseinheit ist bevorzugt dafür ausgebildet, einem Abstandswert eine noch zulässige Fokusabweichung mit Einhaltung einer geforderten Bildschärfe zuzuordnen, insbesondere anhand einer Zuordnungsvorschrift oder Tabelle. Bisher wurde vor allem erläutert, wie eine Messdauer eingestellt und darüber erreicht werden kann, dass die Abstandsmessung hinreichend kleine Messfehler aufweist. Nun geht es um das Gegenstück, nämlich welche Anforderungen an die Messfehler zu stellen sind. Dazu kennt die Steuer- und Auswertungseinrichtung eine Zuordnung zwischen Abstand und für diesen Abstand noch zulässiger Fokusabweichung. Die noch tolerierbare Fokusabweichung, die sich bei dem im Vorabsatz erläuterten vorläufigen Abstandswert aus der Zuordnung ergibt, begrenzt den zulässigen Messfehler und legt somit die erforderliche Messdauer fest. Die Zuordnungsvorschrift kann insbesondere als analytische Funktion oder als Näherung, beispielsweise insgesamt oder stückweise lineare oder polynomiale Funktion, oder als eine Nachschlagtabelle (LUT, Lookup Table) vorgegeben sein.

Die geforderte Bildschärfe ist vorzugsweise erreicht, wenn das Objekt mit der eingestellten Fokuslage noch in einem Tiefenschärfenbereich aufgenommen wird. Das ist über die Messdauer und die damit erreichten größten Messfehler des Abstandswerts gewährleistet. Die Zuordnung von Abstandswert zu zulässiger Fokusabweichung lässt sich hier als Zuordnung zwischen vorläufigem Abstandswert und zugehöriger Ausdehnung des Tiefenschärfenbereichs ausdrücken. Der Tiefenschärfenbereich ist je nach Ausführungsform nicht rein physikalisch definiert, sondern kann davon abhängen, welches Auswertungsziel mit den Bilddaten verfolgt wird.

Die Steuer- und Auswertungseinheit ist bevorzugt dafür ausgebildet, den Tiefenschärfenbereich aus optischen Eigenschaften zu bestimmen. In dieser Ausführungsform ist der Tiefenschärfenbereich im engeren optischen oder physikalischen Sinn zu verstehen. Das lässt sich insbesondere nach der Vorschrift DOF_{P}(d)~d²Nc/f² bestimmen. Hierbei ist DOFₚ der physikalische Tiefenschärfenbereich (DOF, Depth of Field), d der Abstand zum Objekt, N die numerische Apertur des Objektivs, die damit blendenabhängig ist, c der Zerstreuungskreis (Circle of Confusion) und entspricht dem Grad der erlaubten Unschärfe, wie etwa ein Pixel auf dem Bildsensor, und f die Brennweite der Empfangsoptik. Die meisten dieser Parameter sind Objektivkonstanten der gewählten Empfangsoptik, und es wird erkennbar, dass die Abstandsmessung wegen der quadratischen Abstandsabhängigkeit der DOFₚ von d im Nahbereich besonders kleine Messfehler haben sollte.

Die Steuer- und Auswertungseinheit ist bevorzugt dafür ausgebildet, den Tiefenschärfenbereich aus anwendungsspezifischen Anforderungen zu bestimmen. Das ist das mehrfach angesprochene weitere Verständnis eines Tiefenschärfenbereichs. Dabei kommt es nicht primär auf reine Bildschärfekriterien an, sondern auf die Frage, ob die Bilddaten die angestrebte Auswertung zulassen werden. Das kann von Anwendung zu Anwendung sehr unterschiedlich zu beurteilen sein.

Die Steuer- und Auswertungseinheit ist bevorzugt dafür ausgebildet, mit Hilfe der Bilddaten einen Codeinhalt eines Codes auf dem Objekt zu lesen, und wobei eine Fokusabweichung klein genug ist, wenn damit die Bildschärfe ausreicht, einen Code zu lesen. Das kann man als einen bevorzugten Fall anwendungsspezifischer Anforderungen an den Tiefenschärfenbereich verstehen, das Bild soll nämlich so scharf aufgenommen sein, dass ein Code gelesen werden kann. Diese Erwartungshaltung, wann die Bildschärfe ausreicht, um einen Code zu lesen, kann vorab simuliert oder experimentell erzeugt werden. Dazu werden der Kamera Codes unter typischen Bedingungen beispielsweise hinsichtlich Umgebungslicht und Druckqualität in verschiedenen Abständen präsentiert, um herauszufinden, bis zu welcher Fokusabweichung ein Code noch gelesen wird (GoodRead) beziehungsweise ab welcher Fokusabweichung der Code nicht mehr gelesen wird (NoRead).

Die einzustellende Messdauer hängt vorzugsweise von einer Codeart, einer Modulgröße, beispielsweise angegeben in Pixel je Modul, und/oder einem Decodierverfahren ab. Das sind Parameter oder Einstellungen, die sich deutlich auf die Anforderungen an die Bildschärfe auswirken. In der Terminologie eines anwendungsspezifischen Tiefenschärfenbereichs hängt dieser insbesondere von den genannten Parametern ab.

Die Steuer- und Auswertungseinheit ist bevorzugt dafür ausgebildet, die Fokuslage schon während der Messdauer zu verändern. Es wird also mit der Fokusverstellung nicht gewartet, bis nach der eingestellten Messdauer ein präziser Abstandswert vorliegt. Vielmehr wird die Fokuslage schon parallel zu der Abstandsmessung verstellt, etwa anhand des vorläufigen Abstandswerts oder eines bisher ermittelten gleitenden Mittelwertes aus mehreren einzelnen Abstandswerten. Ein Großteil des Verstellwegs kann damit schon während der Messdauer zurückgelegt werden. Die verbleibende Feinanpassung wirkt sich dann deutlich weniger auf die Trägheit der Fokusverstellung aus.

Die Kamera ist vorzugsweise stationär an einer Fördereinrichtung montiert, die zu erfassende Objekte in einer Förderrichtung durch den Erfassungsbereich führt. Dies ist eine sehr häufige industrielle Anwendung einer Kamera. Durch die ständig wechselnden Objekte und die strenge Vorgabe der Objektwechsel durch die Fördereinrichtung muss die Fokusverstellung praktisch ständig und unter engen Zeitvorgaben reagieren können.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Kamera mit einem Abstandssensor;
- Fig. 2: eine dreidimensionale Ansicht einer beispielhaften Anwendung der Kamera in Montage an einem Förderband;
- Fig. 3: eine Darstellung des Messfehlers einer Abstandsmessung beziehungsweise der Ausdehnung eines Tiefenschärfenbereichs in Abhängigkeit vom Objektabstand;
- Fig. 4: eine Darstellung von erfolgreichen und nicht erfolgreichen Leseversuchen eines Codes auf einem Objekt bei verschiedenen Fokuslagen (X-Achse) und Objektabständen (Y-Achse); und
- Fig. 5: eine Darstellung des Messfehlers einer Abstandsmessung gegenüber der Anzahl in ein gleitendes Mittel eingehender Einzelmessungen, wobei zum Vergleich noch eine vorgegebene Ausdehnung eines Tiefenschärfenbereichs eingezeichnet ist.

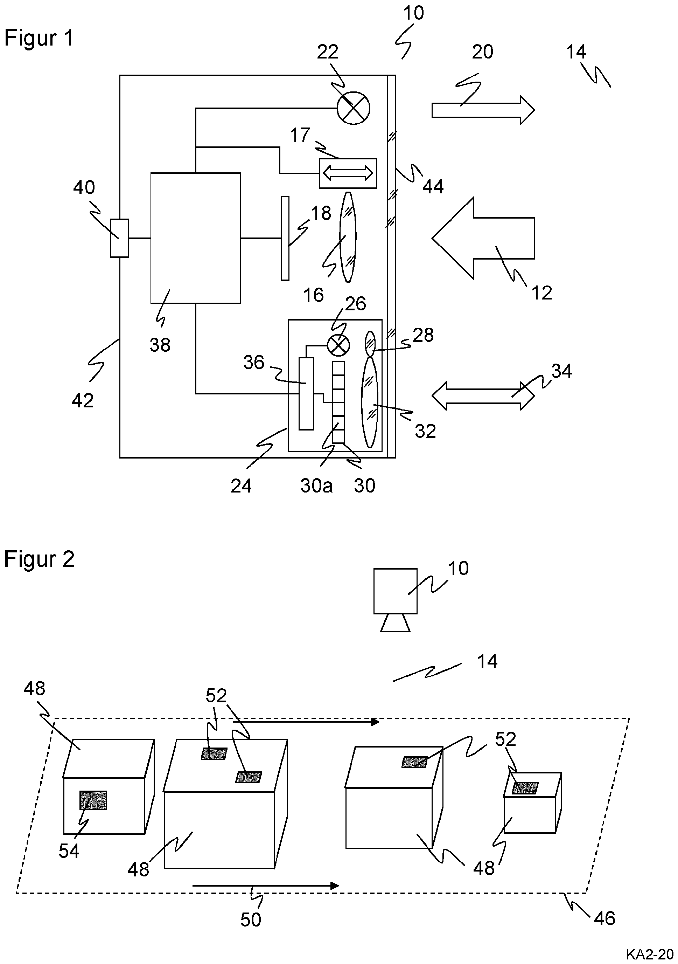

Figur 1 zeigt eine schematische Schnittdarstellung einer Kamera 10. Empfangslicht 12 aus einem Erfassungsbereich 14 trifft auf eine Empfangsoptik 16, die das Empfangslicht 12 auf einen Bildsensor 18 führt. Die optischen Elemente der Empfangsoptik 16 sind vorzugsweise als Objektiv aus mehreren Linsen und anderen optischen Elementen wie Blenden, Prismen und dergleichen ausgestaltet, hier aber vereinfachend nur durch eine Linse repräsentiert. Die Empfangsoptik 16 kann mittels einer Fokusverstellung 17 auf verschiedene Fokuslagen eingestellt werden, um Objekte in unterschiedlichem Abstand scharf aufzunehmen. Dafür sind verschiedenste Funktionsprinzipien vorstellbar, etwa eine Veränderung der Bildschnittweite durch Schrittmotor oder eine Tauchspulaktorik, aber auch eine Veränderung der Brennweite etwa durch eine Flüssig- oder Gellinse.

Um den Erfassungsbereich 14 während einer Aufnahme der Kamera 10 mit Sendelicht 20 auszuleuchten, umfasst die Kamera 10 eine optionale Beleuchtungseinheit 22, die in Figur 1 in Form einer einfachen Lichtquelle und ohne Sendeoptik dargestellt ist. In anderen Ausführungsformen sind mehrere Lichtquellen, wie LEDs oder Laserdioden, beispielsweise ringförmig um den Empfangspfad angeordnet, die auch mehrfarbig und gruppenweise oder einzeln ansteuerbar sein können, um Parameter der Beleuchtungseinheit 22 wie deren Farbe, Intensität und Richtung anzupassen.

Zusätzlich zu dem eigentlichen Bildsensor 18 zur Erfassung von Bilddaten weist die Kamera 10 einen optoelektronischen Abstandssensor 24 auf, der mit einem Lichtlaufzeitverfahren (TOF, Time of Flight) Abstände zu Objekten in dem Erfassungsbereich 14 misst. Der Abstandssensor 24 umfasst einen TOF-Lichtsender 26 mit TOF-Sendeoptik 28 sowie einen TOF-Lichtempfänger 30 mit TOF-Empfangsoptik 32. Damit wird ein TOF-Lichtsignal 34 ausgesandt und wieder empfangen. Eine Lichtlaufzeitmesseinheit 36 bestimmt die Laufzeit des TOF-Lichtsignals 34 und daraus den Abstand zu einem Objekt, an dem das TOF-Lichtsignal 34 zurückgeworfen wurde.

Der TOF-Lichtempfänger 30 weist in der dargestellten Ausführungsform mehrere Lichtempfangselemente 30a oder Pixel auf und kann so sogar ein ortsaufgelöstes Höhenprofil erfassen. Alternativ weist der TOF-Lichtempfänger 30 nur ein Lichtempfangselement 30a auf beziehungsweise verrechnet mehrere Messwerte der Lichtempfangselemente 30a zu einem Abstandswert. Der Aufbau des Abstandssensors 24 ist rein beispielhaft, und auch andere optoelektronische Abstandsmessungen ohne Lichtlaufzeitverfahren sowie nicht-optische Abstandsmessungen sind vorstellbar. Die optoelektronische Entfernungsmessung mittels Lichtlaufzeitverfahren ist bekannt und wird daher nicht im Einzelnen erläutert. Zwei beispielhafte Messverfahren sind Photomischdetektion mit einem periodisch modulierten TOF-Lichtsignal 34 und Pulslaufzeitmessung mit einem pulsmodulierten TOF-Lichtsignal 34. Dabei gibt es auch hochintegrierte Lösungen, in denen der TOF-Lichtempfänger 30 mit der Lichtlaufzeitmesseinheit 36 oder zumindest Teilen davon, etwa TDCs (Time-to-Digital-Converter) für Laufzeitmessungen, auf einem gemeinsamen Chip untergebracht ist. Dazu eignet sich insbesondere ein TOF-Lichtempfänger 30, der als Matrix von SPAD-Lichtempfangselementen 30a aufgebaut ist (Single-Photon Avalanche Diode). Für eine solche SPAD-basierte Abstandsmessung sind mehrere Lichtempfangselemente 30a besonders vorteilhaft, die nicht für eine ortsaufgelöste Messung, sondern eine statistische Mehrfachmessung genutzt werden, mit der ein genauerer Abstandswert bestimmt wird. Die TOF-Optiken 28, 32 sind nur symbolhaft als jeweilige Einzellinsen stellvertretend für beliebige Optiken wie beispielsweise ein Mikrolinsenfeld gezeigt.

Eine Steuer- und Auswertungseinheit 38 ist mit der Fokusverstellung 17, der Beleuchtungseinheit 22, dem Bildsensor 18 und dem Abstandssensor 24 verbunden und für die Steuerungs-, Auswertungs- und sonstigen Koordinierungsaufgaben in der Kamera 10 zuständig. Sie steuert also die Fokusverstellung 17 mit einer Fokuslage entsprechend dem Abstandswert des Abstandssensors 24 an und liest Bilddaten des Bildsensors 18 aus, um sie zu speichern beziehungsweise an einer Schnittstelle 40 auszugeben. Vorzugsweise ist die Steuer- und Auswertungseinheit 38 in der Lage, Codebereiche in den Bilddaten aufzufinden und zu decodieren, womit die Kamera 10 zu einem kamerabasierten Codeleser wird. Für die verschiedenen Steuer- und Auswertungsaufgaben können mehrere Bausteine vorgesehen sein, beispielsweise um die Fokusanpassungen in einem separaten Baustein oder Vorverarbeitungen der Bilddaten auf einem separaten FPGA durchzuführen.

Die Kamera 10 wird durch ein Gehäuse 42 geschützt, das im vorderen Bereich, wo das Empfangslicht 12 einfällt, durch eine Frontscheibe 44 abgeschlossen ist.

Figur 2 zeigt eine mögliche Anwendung der Kamera 10 in Montage an einem Förderband 46. Die Kamera 10 wird hier nur noch als Symbol und nicht mehr mit ihrem bereits anhand der Figur 1 erläuterten Aufbau gezeigt. Das Förderband 46 fördert Objekte 48, wie durch den Pfeil 50 angedeutet, durch den Erfassungsbereich 14 der Kamera 10. Die Objekte 48 können an ihren Außenflächen Codebereiche 52 tragen. Aufgabe der Kamera 10 ist, Eigenschaften der Objekte 48 zu erfassen und in einem bevorzugten Einsatz als Codeleser die Codebereiche 52 zu erkennen, die dort angebrachten Codes auszulesen, zu dekodieren und dem jeweils zugehörigen Objekt 48 zuzuordnen. Um auch Objektseiten und insbesondere seitlich angebrachte Codebereiche 54 zu erfassen, werden vorzugsweise zusätzliche, nicht dargestellte Kameras 10 aus unterschiedlicher Perspektive eingesetzt. Außerdem können mehrere Kameras 10 nebeneinander angeordnet werden, um gemeinsam einen breiteren Erfassungsbereich 14 abzudecken.

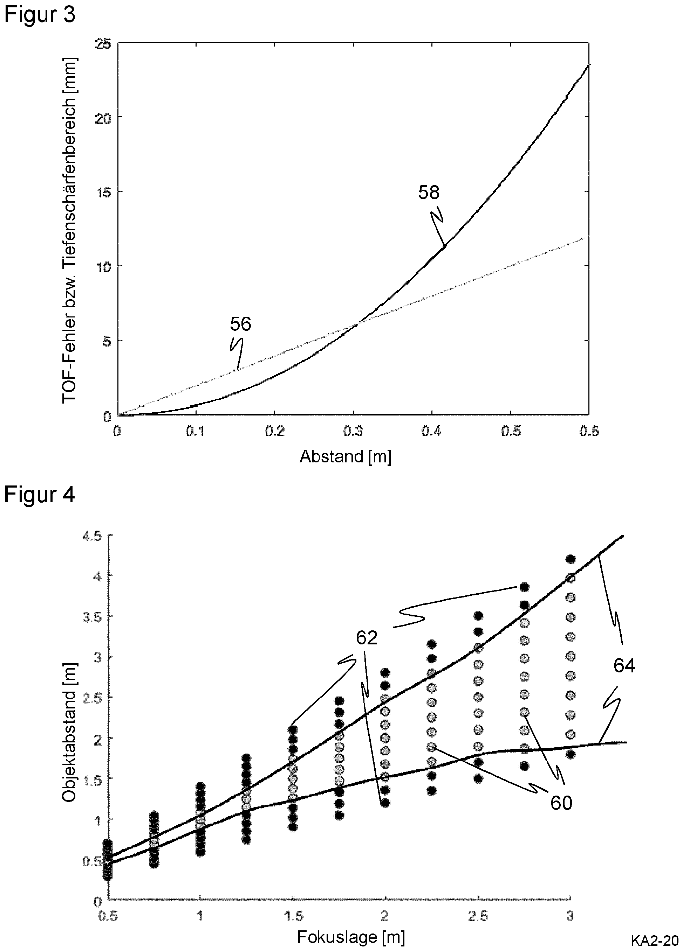

Figur 3 zeigt beispielhaft mit grauer Linie 56 den Messfehler einer Abstandsmessung des Abstandssensors 24 und mit schwarzer Linie 58 die Ausdehnung eines Tiefenschärfenbereichs jeweils in Abhängigkeit vom Objektabstand. Die absolute Messgenauigkeit des Abstandssensors 24 nimmt hier linear mit dem Abstand zu. Der Tiefenschärfenbereich (DOF, Depth of Field) ist der Abstandsbereich, in dem das Bild der Kamera 10 als brauchbar gilt. Dafür kann es verschiedene Kriterien geben, die später diskutiert werden. Der Tiefenschärfenbereich ist ebenfalls abstandsabhängig, wird jedoch nichtlinear mit dem Abstand größer.

Wie in Figur 3 zu erkennen, gibt es einen Abstandsbereich, in dem der Tiefenschärfenbereich kleiner ist als der Fehler der Abstandsmessung. Betroffen sind in diesem Beispiel Abstände unterhalb von etwa 30 cm. Das bedeutet, dass eine an diese Abstandsmessung angepasste Fokuslage keine ausreichend fokussierte Bildaufnahme gewährleisten kann. Denn eine Abstandsmessung, die den Fehlerrahmen annähernd ausschöpft, wird zu einer Fokuslage außerhalb des Tiefenschärfenbereichs führen. Durch Maßnahmen wie ein besseres Objektiv als Empfangsoptik 16 ließe sich der Tiefenschärfenbereich der Kamera 10 erhöhen. Diese Optimierungspotential wird in der Regel ohnehin schon ausgeschöpft, soweit die erheblichen Auswirkungen auf die Herstellkosten hinnehmbar sind, und dennoch würde ein Abstandsbereich verbleiben, in dem diese Maßnahme nicht greift.

Der Ansatz der Erfindung ist daher, stattdessen die Genauigkeit der Abstandsmessung zu verbessern, und zwar abstandsabhängig und in Anpassung an den für den jeweiligen Abstand gegebene Tiefenschärfenbereich. Interessant ist dies vor allem für Abstandsbereiche, in denen der Tiefenschärfenbereich in der Größenordnung des Fehlers des Abstandssensors 24 liegt.

Für diesen Ansatz sind zwei Fragen zu klären. Einerseits muss der Abstandsensor 24 jeweils Abstände mit einem Höchstfehler messen. Andererseits ist festzulegen, welcher Höchstfehler eigentlich einzuhalten ist, damit eine Fokuseinstellung gut genug wird, also Bilder mit ausreichender Qualität liefert, wobei letzteres natürlich auch Kriterien impliziert, wann die Qualität eines Bildes ausreicht. Da dies alles in Abhängigkeit vom Objektabstand definiert werden soll, wird ein zumindest grober Anfangswert für die Abstandsmessung benötigt. Dafür kommt es noch nicht auf Genauigkeit an, es genügt irgendein Messwert für den Abstand.

Die Messgenauigkeit des Abstandssensors 24 lässt sich durch Veränderung der Messdauer variieren. Warum eine längere Messdauer zu genaueren Ergebnissen führt, lässt sich gut an einem SPAD-basierten Pulsverfahren illustrieren. Jedes SPAD trägt bei einer solchen sogenannten direkten Lichtlaufzeitmessung (dTOF, direct Time of Flight) ein Ereignis oder einen Zeitstempel bei, und diese Ereignisse werden gemeinsam statistisch beispielsweise über ein Histogramm ausgewertet. Bei längerer Messdauer können wiederholt Pulse ausgesandt werden, so dass mehr Ereignisse registriert werden und dementsprechend die bessere Statistik auch ein besseres Messergebnis ermöglicht. Ganz allgemein kann unabhängig von der Technologie des Abstandssensors 24 über Messwiederholungen gemittelt werden, wobei dann der Fehler mit der Wurzel der Anzahl Messwiederholungen sinkt, und eine längere Messdauer erlaubt eine entsprechende Erhöhung dieser Anzahl.

Um die Messdauer zu variieren, kann der Abstandssensor 24 jeweils umparametriert werden. Das kann aber transiente Effekte mit sich bringen, und es ist nicht einfach sicherzustellen, dass die Umparametrierung selbst keine systematischen Fehler der Messung erzeugt. Daher wird vorzugsweise das Messverhalten des Abstandssensors 24 gar nicht angetastet, sondern ein adaptives gleitendes Mittel gebildet. Der Abstandssensor 24 führt jeweils Einzelmessungen mit kurzer Messdauer aus, beispielsweise bei einem Pulsverfahren durch Aussenden und Empfangen eines Pulses oder weniger Pulse. Die einzelnen Abstandswerte dieser Einzelmessungen werden gleitend gemittelt. Das Mittelungsfenster oder die Anzahl k der jeweiligen Mittlungen wird an den Abstand angepasst. Für einen kleinen Tiefenschärfenbereich, insbesondere im Nahbereich, wird also ein großes Mittelungsfenster oder k gewählt, um die statistische Fluktuation zu reduzieren. Umgekehrt reicht bei großem Tiefenschärfenbereich, insbesondere im Fernbereich, ein kleines Mittelungsfenster oder k aus. Damit kann die Fokusverstellung stets mit geringstmöglicher Trägheit reagieren, denn ein größeres Mittelungsfenster oder allgemein eine größere Messdauer wird nur auf das Messergebnis gewartet, wenn diese Präzision tatsächlich gefordert ist.

Oben wurde kurz auf einen vorläufigen Abstandswert eingegangen, anhand dessen der geforderte und erreichte Messfehler der Abstandsmessung festgelegt wird. Wie nun gesehen, eignet sich dafür insbesondere das Ergebnis einer ersten Messung mit kurzer Messdauer oder ein gleitendes Mittel mit kleinem k beziehungsweise k=1.

Mit der variablen Messdauer steht ein Werkzeug zur Verfügung, um mit dem Abstandssensor 24 bei geforderten Höchstfehlern zu messen, und die erste der beiden eingangs gestellten Fragen ist beantwortet. Für die zweite Frage, welcher Höchstfehler eigentlich einzuhalten ist, um eine Fokuslage für Bilder ausreichender Qualität einzustellen, soll zunächst zwischen rein optischen oder physikalischen Anforderungen und anwendungsspezifischen Anforderungen unterschieden werden.

Ein physikalischer Tiefenschärfenbereich DOFₚ(d) lässt sich durch die Formel DOFₚ(d) ~ 2d²Nc/f² approximieren. Dabei ist d der Abstand zwischen Kamera 10 und Objekt 48, N die numerische Apertur f_{Num} des Objektivs der Empfangsoptik 16 und damit blendenabhängig, c der Zerstreukreis oder circle of confusion und entspricht dem Grad der erlaubten Unschärfe von beispielsweise einem Pixel auf dem Bildsensor 18, und f ist die Brennweite des Objektivs. Vieles davon sind demnach Kenngrößen des Objektivs, die bekannt und fix sind. Weitere Einflüsse auf den Tiefenschärfenbereich, wie die Blende oder die Belichtung, lassen sich durch Fixierung oder optimale Einstellung weitgehend ausschließen.

Nicht berücksichtigt sind jedoch in dem physikalischer Tiefenschärfenbereich DOFₚ(d) spezifische Anforderungen der Anwendung. Das wird an dem Beispiel des Codelesens deutlich: Es kommt letztlich nicht darauf an, ob Bilder physikalische Kontrastkriterien erfüllen, sondern ob der Code gelesen werden kann. In manchen Fällen lässt sich dieser anwendungsspezifische Tiefenschärfenbereich DOFₐₚₚ durch einen Faktor κ modellieren, der von applikationsspezifischen Parametern abhängt: DOFapp(d) = κ DOFₚ(d). Typische applikationsspezifische Parameter sind hier die Modulgröße, beispielsweise gemessen in Pixel pro Modul, die Codeart und nicht zuletzt der angewandte Decoderalgorithmus. Wenn sich dies nicht durch einen einfachen Faktor κ abbilden lässt, so bleibt in jedem Fall die Möglichkeit, DOFₐₚₚ durch Simulation oder Experiment zu bestimmen.

Figur 4 zeigt eine Darstellung von Leseversuchen eines Codes 52 auf einem Objekt 48 bei verschiedenen Fokuslagen und Objektabständen. Helle Punkte 60 bezeichnen erfolgreiche Leseversuche (GoodReads) und dunkle Punkte 62 nicht erfolgreiche Leseversuche (NoReads). Die beiden Linien 64 folgen der Grenze dazwischen, und das Abstandsintervall der beiden Linien bezeichnet je Fokuslage oder auch je Objektabstand den geforderten anwendungsspezifischen Tiefenschärfenbereich DOFₐₚₚ(d).

Ein solches Diagramm kann für bestimmte Rahmenbedingungen hinsichtlich der genannten Parameter wie Codeart, Modulgröße, Decodierverfahren, Belichtung durch Messung oder Simulation erzeugt werden. Dadurch entsteht eine Zuordnungsvorschrift in Form einer Funktion oder Tabelle (LUT, Lookup Table), aus der die Steuer- und Auswertungseinheit 38 bei gegebenem vorläufigem Abstandswert einen Tiefenschärfenbereich und damit geforderten Höchstfehler der Abstandsmessung auslesen kann, mit dem gewährleistet ist, dass ein Code lesbar sein wird. Es kann mehrere Zuordnungsvorschriften zu verschiedenen Rahmenbedingungen geben, so dass dann situations- und anwendungsbezogen beispielsweise je nach Codeart, Modulgröße, Belichtung und eingesetztem Decoder der passende Höchstfehler bestimmt wird.

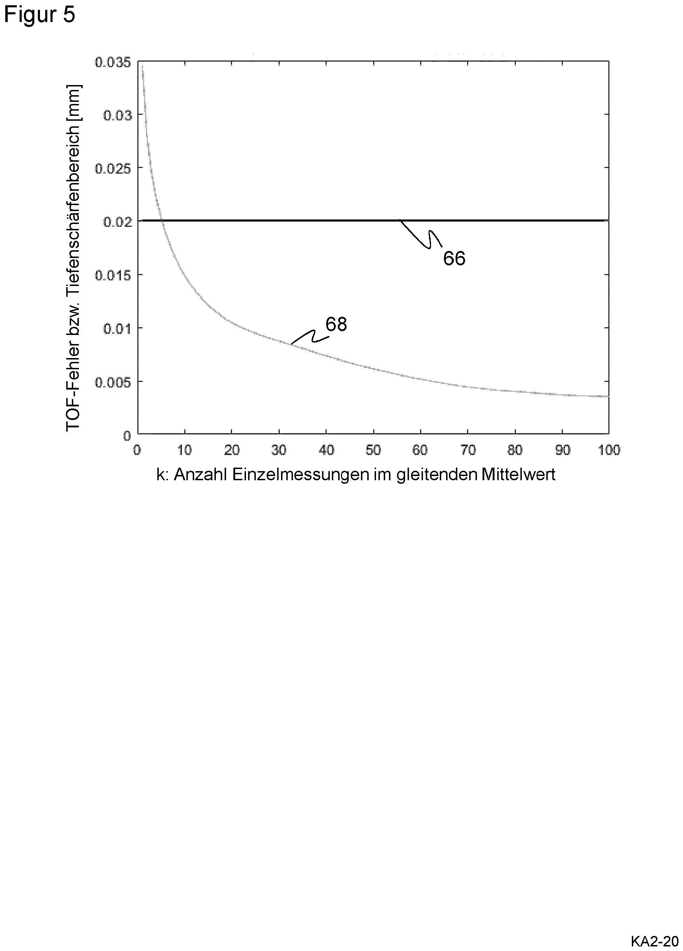

Figur 5 illustriert nochmals, wie eine passende Messdauer für einen geforderten Tiefenschärfenbereich gefunden werden kann. Gezeigt ist zum einen mit schwarzer Linie 66 der geforderte Tiefenschärfenbereich, der nach einem der soeben beschriebenen Verfahren festgelegt ist. Weiter ist mit grauer Linie 68 der Messfehler einer Abstandsmessung des Abstandssensors 24 in Abhängigkeit von der Messdauer gezeigt, wobei sich hier die Messdauer auf der X-Achse speziell als Mittelungstiefe k oder Anzahl der Einzelmessungen eines gleitenden Mittelwerts bestimmt. Je mehr Einzelmessungen k in die Mittelung eingehen, umso länger also Messdauer, desto geringer wird der Messfehler. Dieses Verhalten wird in Figur 5 vereinfachend als konstant angesehen und vorab kalibriert. Für das konkrete Beispiel kann eine Mittelungstiefe von k>10 gewählt werden, wobei hier noch etwas Puffer gegenüber dem eigentlichen Schnittpunkt der beiden Linien 66, 68 bei etwa k=6 berücksichtigt ist.

Abschließend sei noch ein konkretes Beispiel betrachtet. Ein Objekt 48 ist im Abstand 0,1 m zu der Kamera 10 angeordnet. Analog zu Figur 5 wurde eine erforderliche Mittelungstiefe k=10 der gleitenden Mittelung ermittelt. Eine fiktive Messreihe von Abstandswerten Dist könnte dann so aussehen:
- Dist1: 0,095 m: Fokuslage wird auf 0,095 m eingestellt. Dies dauert eine Zeit dT, die durchaus länger sein kann als eine einzelne Abstandsmessung.
- Dist2: 0,113 m: Berechne Mittelwert aus zwei Werten.
- Dist3: 0,101 m: Berechne Mittelwert aus drei Werten.
- Dist4: 0,098 m: Berechne Mittelwert aus vier Werten. Jetzt ist die Fokuslage auf den ersten Abstand Dist1=0,095 m eingestellt. Verstelle die Fokuslage weiter auf den neuen Mittelwert (Refokussierung). Dies geschieht in der Regel viel schneller, weil der Stellweg kürzer ist.
- Dist5: 0,108 m: Mittelwert aus fünf Werten, Refokussierung.
- Dist10: 0,089 m: Mittelwert aus zehn Werten, Refokussierung. Gefordertes k=10 erstmals erreicht.
- Dist11: 0,106 m: Mittelwert aus den letzten 10 Werten. Refokussierung.
- Dist12: 0,101 m: Mittelwert aus den letzten 10 Werten. Refokussierung.
- Dist46: 0,099 m: Mittelwert aus den letzten 10 Werten. Refokussierung.
- Dist47: 0,531 m: SPRUNG größer als ein definierter Schwellenwert. Für den neuen Abstand wird auch ein neues k gesetzt. In diesem Fall ist der Abstand so groß, dass der Tiefenschärfenbereich schon für eine Einzelmessung größer ist als der Messfehler der Abstandsmessung (vgl. Figur 3). Also genügt ein Mittelungsfenster mit k=1, nur noch eine Einzelmessung wird benötigt. Die Fokuslage wird auf 0,531 m gesetzt. Dies dauert eine Zeit dT, die durchaus länger [... usw....]

Die Messreihe ist weitgehend schon erklärt. Es wird bevorzugt sofort die zum jeweiligen Zeitpunkt bestbekannte Fokuslage angefahren. Anfangs ist das nur eine Grobeinstellung, die einige Verstellzeit benötigen kann, die weiteren Schritte führen die Fokuslage entsprechend der immer besseren Abstandsmessung nach, wobei diese kleinen Verstellwege schnell zurückgelegt sind. Ab dem Messen von k=10 einzelnen Abstandswerten ist die Fokuslage genau genug für eine Bildaufnahme innerhalb des geforderten Tiefenschärfenbereichs.

Eine Besonderheit ergibt sich, wenn ein neues Objekt 48 in den Erfassungsbereich 14 tritt beziehungsweise der Abstand nach einer Kante nun zu einer anderen Objektstruktur gemessen wird. In der beispielhaften Messreihe geschieht das bei der letzten angegebenen Messung Dist47. Erkannt wird dieser Sprung daran, dass sich der neue Wert Dist47 stark vom bisherigen gleitenden Mittelwert unterscheidet. Etwas formaler kann dafür die Absolutdifferenz des aktuellen einzelnen Abstandswerts, hier Dist47=0,531 m, und des bisherigen gleitenden Mittelwerts, hier recht genau bei 0,1 m, mit einem Schwellenwert verglichen werden. Der Schwellenwert orientiert sich an der erwartbaren statistischen Schwankung, etwa als Vielfaches einer Standardabweichung, und kann abstandsabhängig oder fix als Kompromiss über alle Abstände festgelegt werden. Solange die besagte Absolutdifferenz unter dem Schwellenwert liegt, wird die gleitende Mittelung fortgesetzt. Das ist bis zum Messwert Dist46 der Fall. Bei einer Schwellenüberschreitung wird eine neue Mittelung gestartet, da ansonsten ein nicht aussagekräftiger Mischwert entstünde, und dabei vorzugsweise auch ein neues k gewählt.

Es ist vorstellbar, zusätzlich während des Scharfstellens Bilder aufzunehmen und Größen wie den Kontrast aus dem Bild zu errechnen.

## Patentansprüche

1. Kamera (10) zur Erfassung eines Objekts (48) in einem Erfassungsbereich (14), die einen Bildsensor (18) zur Aufnahme von Bilddaten, eine Empfangsoptik (16) mit einer Fokusverstelleinheit (17) zur Einstellung einer Fokuslage, einen Abstandssensor (24) zum Messen eines Abstandswerts zu dem Objekt (48) sowie eine mit dem Abstandssensor (24) und der Fokusverstelleinheit (17) verbundene Steuer- und Auswertungseinheit (38) aufweist, um in Abhängigkeit von dem Abstandswert eine Fokuslage einzustellen,
**dadurch gekennzeichnet,**
**dass** die Steuer- und Auswertungseinheit (38) dafür ausgebildet ist, mit dem Abstandssensor (24) einen Abstandswert über eine veränderliche Messdauer zu bestimmen, die in Abhängigkeit von einem vorläufigen Abstandswert vorgegeben wird, so dass ein Messfehler des Abstandswerts und damit bei Aufnahme von Bilddaten des Objekts (48) eine Fokusabweichung der eingestellten Fokuslage von einer idealen Fokuslage klein genug für eine geforderte Bildschärfe der Bilddaten bleibt.

2. Kamera (10) nach Anspruch 1,
wobei der Abstandssensor (24) in die Kamera (10) integriert ist und/oder wobei der Abstandssensor (24) als optoelektronischer Abstandssensor (24) insbesondere nach dem Prinzip des Lichtlaufzeitverfahrens ausgebildet ist.

3. Kamera (10) nach Anspruch 1 oder 2,
wobei die Steuer- und Auswertungseinheit (38) dafür ausgebildet ist, mit Hilfe der Bilddaten einen Codeinhalt eines Codes (52) auf dem Objekt (48) zu lesen.

4. Kamera (10) nach einem der vorhergehenden Ansprüche,
wobei die Steuer- und Auswertungseinheit (38) dafür ausgebildet ist, den Abstandssensor jeweils für eine Abstandsmessung mit einer erforderlichen Messdauer umzuparametrieren.

5. Kamera (10) nach einem der Ansprüche 1 bis 3,
wobei der Abstandssensor (24) dafür ausgebildet ist, einzelne Abstandsmesswerte nach einer festen Einzelmessdauer zu erzeugen, und wobei die Steuer- und Auswertungseinheit (38) dafür ausgebildet ist, eine erforderliche Messdauer als Vielfaches der Einzelmessdauer durch eine Vielzahl von Einzelmessungen einzustellen.

6. Kamera (10) nach Anspruch 5,
wobei die Steuer- und Auswertungseinheit (38) dafür ausgebildet ist, den Abstandswert als gleitendes Mittel über eine Vielzahl von Einzelmessungen zu bestimmen.

7. Kamera (10) nach Anspruch 6,
wobei die Steuer- und Auswertungseinheit (38) dafür ausgebildet ist, den gleitenden Mittelwert zurückzusetzen, wenn sich ein einzelner Abstandsmesswert um mindestens einen Schwellenwert vom bisherigen gleitenden Mittelwert unterscheidet.

8. Kamera (10) nach einem der Ansprüche 5 bis 7,
wobei der vorläufige Abstandswert ein einzelner Abstandsmesswert oder ein bisheriges gleitendes Mittel über einige Einzelmessungen ist.

9. Kamera (10) nach einem der vorhergehenden Ansprüche,
wobei die Steuer- und Auswertungseinheit (38) dafür ausgebildet ist, einem Abstandswert eine noch zulässige Fokusabweichung mit Einhaltung einer geforderten Bildschärfe zuzuordnen, insbesondere anhand einer Zuordnungsvorschrift oder Tabelle.

10. Kamera (10) nach einem der vorhergehenden Ansprüche,
wobei die geforderte Bildschärfe erreicht ist, wenn das Objekt (48) mit der eingestellten Fokuslage noch in einem Tiefenschärfenbereich aufgenommen wird, insbesondere einem aus optischen Eigenschaften und/oder aus anwendungsspezifischen Anforderungen bestimmten Tiefenschärfenbereich.

11. Kamera (10) nach einem der vorhergehenden Ansprüche,
wobei die Steuer- und Auswertungseinheit (38) dafür ausgebildet ist, mit Hilfe der Bilddaten einen Codeinhalt eines Codes (52) auf dem Objekt (48) zu lesen, und wobei eine Fokusabweichung klein genug ist, wenn damit die Bildschärfe ausreicht, einen Code (52) zu lesen.

12. Kamera (10) nach einem der vorhergehenden Ansprüche,
wobei die Messdauer von einer Codeart, einer in Pixel je Modul gemessenen Modulgröße und/oder einem Decodierverfahren abhängt.

13. Kamera (10) nach einem der vorhergehenden Ansprüche,
wobei die Steuer- und Auswertungseinheit (38) dafür ausgebildet ist, die Fokuslage schon während der Messdauer zu verändern.

14. Kamera (10) nach einem der vorhergehenden Ansprüche,
die stationär an einer Fördereinrichtung (46) montiert ist, die zu erfassende Objekte (48) in einer Förderrichtung durch den Erfassungsbereich (14) führt.

15. Verfahren zur Erfassung von Bilddaten eines Objekts (48) in einem Erfassungsbereich (14), bei dem mit einem Abstandssensor ein Abstandswert zu dem Objekt (48) gemessen und in Abhängigkeit von dem Abstandswert eine Fokuslage einer Empfangsoptik (16) eingestellt wird,
**dadurch gekennzeichnet,**
**dass** der Abstandswert über eine veränderliche Messdauer bestimmt wird, die in Abhängigkeit von einem vorläufigen Abstandswert vorgegeben wird, so dass ein Messfehler des Abstandswerts und damit bei Aufnahme von Bilddaten des Objekts (48) eine Fokusabweichung der eingestellten Fokuslage von einer idealen Fokuslage klein genug für eine geforderte Bildschärfe der Bilddaten bleibt.

## Claims

1. A camera (10) for detecting an object (48) in a detection area (14), comprising an image sensor (18) for recording image data, reception optics (16) with a focus adjustment unit (17) for adjusting a focus position, a distance sensor (24) for measuring a distance value to the object (48), and a control and evaluation unit (38) connected to the distance sensor (24) and the focus adjustment unit (17) for setting a focus position as a function of the distance value, **characterized in that** the control and evaluation unit (38) is configured to use the distance sensor (24) to determine a distance value over a variable measurement duration that is determined as a function of a preliminary distance value, so that a measurement error of the distance value and thus, when image data of the object (48) are recorded, a focus deviation of the set focus position from an ideal focus position remains small enough for a required image sharpness of the image data.

2. The camera (10) according to claim 1,
wherein the distance sensor (24) is integrated into the camera (10) and/or wherein the distance sensor (24) is configured as an optoelectronic distance sensor (24), in particular according to the principle of the time of flight method.

3. The camera (10) according to claim 1 or 2,
wherein the control and evaluation unit (38) is configured to read a code content of a code (52) on the object (48) using the image data.

4. The camera (10) according to any of the preceding claims,
wherein the control and evaluation unit (38) is configured to reparametrize the distance sensor with a required measurement duration for a respective distance measurement.

5. The camera (10) according to any of claims 1 to 3,
wherein the distance sensor (24) is configured to generate individual distance measurement values according to a fixed individual measurement duration, and wherein the control and evaluation unit (38) is configured to set a required measurement duration as a multiple of the individual measurement duration by a plurality of individual measurements.

6. The camera (10) according to claim 5,
wherein the control and evaluation unit (38) is configured to determine the distance value as a moving average over a plurality of individual measurements.

7. The camera (10) according to claim 6,
wherein the control and evaluation unit (38) is configured to reset the moving average value when an individual distance measurement value differs from the previous moving average value by at least a threshold value.

8. The camera (10) according to any of claims 5 to 7,
wherein the preliminary distance value is an individual distance measurement value or a past moving average over some individual measurements.

9. The camera (10) according to any of the preceding claims,
wherein the control and evaluation unit (38) is configured to assign a still permissible focus deviation satisfying a required image sharpness to a distance value, in particular on the basis of an assignment rule or table.

10. The camera (10) according to any of the preceding claims,
wherein the required image sharpness is achieved when the object (48) is recorded with the set focus position still in a depth of field range, in particular a depth of field range determined from optical properties and/or from application-specific requirements.

11. The camera (10) according to any of the preceding claims,
wherein the control and evaluation unit (38) is configured to read a code content of a code (52) on the object (48) using the image data, and wherein a focus deviation is small enough if the image sharpness is sufficient to read a code (52).

12. The camera (10) according to any of the preceding claims,
wherein the measurement duration depends on a code type, a module size measured in pixels per module and/or a decoding method.

13. The camera (10) according to any of the preceding claims,
wherein the control and evaluation unit (38) is configured to change the focus position already during the measurement duration.

14. The camera (10) according to any of the preceding claims,
the camera (10) being stationarily mounted on a conveyor device (46) that guides objects (48) to be detected in a conveying direction through the detection area (14).

15. A method for recording image data of an object (48) in a detection area (14), wherein a distance value to the object (48) is measured using a distance sensor, and a focus position of a reception optics (16) is set as a function of the distance value,
**characterized in that** the distance value is determined over a variable measurement duration that is predetermined as a function of a preliminary distance value, so that a measurement error of the distance value and thus, when image data of the object (48) are recorded, a focus deviation of the set focus position from an ideal focus position remains small enough for a required image sharpness of the image data.

## Revendications

1. Caméra (10) pour la détection d'un objet (48) dans une zone de détection (14), comprenant un capteur d'image (18) pour l'enregistrement de données d'image, une optique de réception (16) avec une unité de réglage de focalisation (17) pour le réglage d'une position de focalisation, un capteur de distance (24) pour la mesure d'une valeur de distance par rapport à l'objet (48), et une unité de commande et d'évaluation (38) reliée au capteur de distance (24) et à l'unité de réglage de focalisation (17) pour le réglage d'une position de focalisation en fonction de la valeur de distance
**caractérisé en ce que** l'unité de commande et d'évaluation (38) est configurée pour déterminer, à l'aide du capteur de distance (24), une valeur de distance sur une durée de mesure variable qui est déterminée en fonction d'une valeur de distance préliminaire, de sorte qu'une erreur de mesure de la valeur de distance et donc, lors de l'enregistrement de données d'image de l'objet (48), un écart de focalisation de la position de focalisation réglée par rapport à une position de focalisation idéale reste suffisamment faible pour une netteté d'image requise des données d'image.

2. Caméra (10) selon la revendication 1,
dans laquelle le capteur de distance (24) est intégré dans la caméra (10) et/ou dans laquelle le capteur de distance (24) est configuré comme un capteur de distance optoélectronique (24), notamment selon le principe de la méthode du temps de vol de la lumière.

3. Caméra (10) selon la revendication 1 ou 2,
dans laquelle l'unité de commande et d'évaluation (38) est configurée pour lire un contenu de code d'un code (52) sur l'objet (48) en utilisant les données d'image.

4. Caméra (10) selon l'une quelconque des revendications précédentes,
dans laquelle l'unité de commande et d'évaluation (38) est configurée pour reparamétrer le capteur de distance avec une durée de mesure requise pour une mesure de distance respective.

5. Caméra (10) selon l'une des revendications 1 à 3,
dans laquelle le capteur de distance (24) est configuré pour générer des valeurs de mesure de distance individuelles selon une durée de mesure individuelle fixe, et dans laquelle l'unité de commande et d'évaluation (38) est configurée pour régler une durée de mesure requise comme un multiple de la durée de mesure individuelle par une pluralité de mesures individuelles.

6. Caméra (10) selon la revendication 5,
dans laquelle l'unité de commande et d'évaluation (38) est configurée pour déterminer la valeur de distance comme une moyenne mobile sur une pluralité de mesures individuelles.

7. Caméra (10) selon la revendication 6,
dans laquelle l'unité de commande et d'évaluation (38) est configurée pour réinitialiser la valeur moyenne mobile lorsqu'une valeur de mesure de distance individuelle diffère de la valeur moyenne mobile précédente d'au moins une valeur seuil.

8. Caméra (10) selon l'une des revendications 5 à 7,
dans laquelle la valeur de distance préliminaire est une valeur de mesure de distance individuelle ou une moyenne mobile passée sur certaines mesures individuelles.

9. Caméra (10) selon l'une des revendications précédentes,
dans laquelle l'unité de commande et d'évaluation (38) est configurée pour affecter à une valeur de distance un écart de focalisation encore admissible en respectant une netteté d'image requise, notamment sur la base d'une règle d'association ou d'un tableau.

10. Caméra (10) selon l'une des revendications précédentes,
dans laquelle la netteté d'image requise est obtenue lorsque l'objet (48) avec la position de focalisation réglée est encore enregistré dans une zone de profondeur de champ, en particulier une zone de profondeur de champ déterminée à partir de propriétés optiques et/ou modifications spécifiques à l'application.

11. Caméra (10) selon l'une des revendications précédentes,
dans laquelle l'unité de commande et d'évaluation (38) est configurée pour lire un contenu de code d'un code (52) sur l'objet (48) en utilisant les données d'image, et dans laquelle un écart de focalisation est suffisamment petit si la netteté de l'image est suffisante pour lire un code (52).

12. Caméra (10) selon l'une des revendications précédentes,
dans laquelle la durée de mesure dépend d'un type de code, d'une taille de module mesurée en pixels par module et/ou d'une méthode de décodage.

13. Caméra (10) selon l'une des revendications précédentes,
dans laquelle l'unité de commande et d'évaluation (38) est configurée pour modifier la position de focalisation déjà pendant la durée de mesure.

14. Caméra (10) selon l'une des revendications précédentes,
la caméra (10) étant montée de manière fixe sur un dispositif de convoyage (46) qui guide les objets (48) à détecter dans une direction de convoyage à travers la zone de détection (14).

15. Procédé pour la détection de données d'image d'un objet (48) dans une zone de détection (14), dans lequel une valeur de distance par rapport à l'objet (48) est mesurée à l'aide d'un capteur de distance, et une position de focalisation d'une optique de réception (16) est réglée en fonction de la valeur de distance, **caractérisé en ce que** la valeur de distance est déterminée sur une durée de mesure variable qui est prédéterminée en fonction d'une valeur de distance préliminaire, de sorte qu'une erreur de mesure de la valeur de distance et donc, lors de l'enregistrement de données d'image de l'objet (48), un écart de focalisation de la position de focalisation réglée par rapport à une position de focalisation idéale reste suffisamment faible pour une netteté d'image requise des données d'image.
